# EUROPEAN PATENT APPLICATION

(11) **EP 4 553 691 A1**
(43) Date of publication of application: **14.05.2025**
(21) Application number: 24210731.6
(22) Date of filing: 05.11.2024
(51) Int. Cl.: G06F 30/15, G06F 30/17, G06F 30/23

(54) **VIRTUAL FATIGUE TESTING**

(30) Priority: 07.11.2023 US 202318503237
(71) Applicant: The Boeing Company, Arlington, VA 22202 (US)
(72) Inventor: LIN, Zhong, Arlington, 22202 (US); HU, Zhenning, Arlington, 22202 (US); WANTHAL, Steven Paul, Arlington, 22202 (US); ROSE, Cynthia Anne, Arlington, 22202 (US); RAMIREZ, Eduardo Dejesus, Arlington, 22202 (US); SERMERSHEIM, Jeffrey S., Arlington, 22202 (US); ZANONI, Edward John, Arlington, 22202 (US)
(74) Representative: Sandri, Sandro

(57) **Abstract**

A method for virtual fatigue testing includes reading a coarse-grid finite-element-model of a component from one or more libraries with a computer, and identifying static stress locations neighboring at least one of fasteners and non-fastener stress concentration regions in the component by a static analysis of a component intermediate-grid finite-element-model of the component, identifying hot spot locations in the component intermediate-grid finite-element-model by performing a fatigue screening on the component, generating details for the component intermediate-grid finite-element-model based on the hot spot locations, and predicting crack results by a deterministic durability-and-damage-tolerance analysis of the details for a component fine-grid finite-element-model of the component, calculating a crack margins for the component fine-grid finite-element-model by a probabilistic durability-and-damage-tolerance analysis of the crack results, and generating an output file that contains the final crack initiation margin and the final crack growth margin.

## Description

### TECHNICAL FIELD

The disclosure relates generally to component testing, and in particular, to virtual fatigue testing

### BACKGROUND

Full-scale fatigue tests are among the last tests run as part of airplane certification. Fatigue issues identified at such late stages are time consuming and expensive to address. In particular, multiple aircraft are likely already built, and manufacturing processes and tooling already exists when the fatigue issues are discovered.

Accordingly, those skilled in the art continue with research and development efforts in the field of virtual fatigue testing at high-fidelity around fasteners and non-fastener stress concentration features in components.

### SUMMARY

A method for virtual fatigue testing is provided herein. The method includes reading a coarse-grid finite-element-model of a component from one or more libraries with a computer; and identifying a plurality of static stress locations neighboring at least one of one or more fasteners and one or more non-fastener stress concentration regions in the component by a static analysis of a component intermediate-grid finite-element-model of the component. The component intermediate-grid finite-element-model has higher fidelity than the coarse-grid finite-element-model. The method includes identifying a plurality of hot spot locations in the component intermediate-grid finite-element-model by performing a fatigue screening on the component; generating a plurality of details for the component intermediate-grid finite-element-model based on the plurality of hot spot locations; and predicting a plurality of crack results by a deterministic durability-and-damage-tolerance analysis of the plurality of details for a component fine-grid finite-element-model of the component. The component fine-grid finite-element-model has higher fidelity than the component intermediate-grid finite-element-model. The method includes calculating a plurality of crack margins for the component fine-grid finite-element-model by a probabilistic durability-and-damage-tolerance analysis of the plurality of crack results. The plurality of crack margins include a final crack initiation margin and a final crack growth margin. The method also includes generating an output file that contains the final crack initiation margin and the final crack growth margin.

In one or more embodiments of the method, the fatigue screening includes generating the component intermediate-grid finite-element-model by increasing a fidelity of the coarse-grid finite-element-model neighboring at least one of the one or more fasteners and the one or more non-fastener stress concentration regions.

In one or more embodiments of the method, the fatigue screening includes validating the component intermediate-grid finite-element-model with test data.

In one or more embodiments of the method, the fatigue screening includes performing a fatigue crack initiation analysis on a plurality of elements in the component intermediate-grid finite-element-model to identify the plurality of hot spot locations.

In one or more embodiments of the method, the deterministic durability-and-damage-tolerance analysis includes calculating one or more crack initiation results in the component fine-grid finite-element-model in response to a plurality of fatigue spectra.

In one or more embodiments of the method, the deterministic durability-and-damage-tolerance analysis includes calculating one or more crack growth results in the component fine-grid finite-element-model in response to the one or more crack initiation results. The plurality of crack results include the one or more crack growth results.

In one or more embodiments of the method, the probabilistic durability-and-damage-tolerance analysis includes calculating a single flight probability of failure in response to a plurality of geometry variations, a plurality of material variations, a plurality of loading variations, and a plurality of manufacturing variations of the component; and calculating the plurality of crack margins for the component fine-grid finite-element-model in response to the single flight probability of failure.

In one or more embodiments, the method further includes extracting the one or more fasteners and a corresponding joint from the component intermediate-grid finite-element-model by a free body load extraction; and generating a plurality of loads for the one or more fasteners and the corresponding joint.

In one or more embodiments, the method further includes generating a model of the one or more fasteners and the corresponding joint by a parametric modeling in response to a plurality of boundary load and a plurality of applied loads to the component intermediate-grid finite-element-model. The model includes the plurality of details.

A system for virtual fatigue testing is provided herein. The system includes one or more libraries operational to store a coarse-grid finite-element-model of a component; and a computer operational to identify a plurality of static stress locations neighboring at least one of one or more fasteners and one or more non-fastener stress concentration regions in the component by a static analysis of a component intermediate-grid finite-element-model of the component. The component intermediate-grid finite-element-model has higher fidelity than the coarse-grid finite-element-model. The computer is operational to identify a plurality of hot spot locations in the component intermediate-grid finite-element-model by performing a fatigue screening on the component; generate a plurality of details for the component intermediate-grid finite-element-model based on the plurality of hot spot locations; and predict a plurality of crack results by a deterministic durability-and-damage-tolerance analysis of the plurality of details for a component fine-grid finite-element-model of the component. The component fine-grid finite-element-model has higher fidelity than the component intermediate-grid finite-element-model. The computer is also operational to calculate a plurality of crack margins for the component fine-grid finite-element-model by a probabilistic durability-and-damage-tolerance analysis of the plurality of crack results. The plurality of crack margins include a final crack initiation margin and a final crack growth margin. The computer is operational to generate an output file that contains the final crack initiation margin and the final crack growth margin.

In one or more embodiments of the system, the fatigue screening includes generating the component intermediate-grid finite-element-model by increasing a fidelity of the coarse-grid finite-element-model neighboring the at least one of the one or more fasteners and the one or more non-fastener stress concentration regions.

In one or more embodiments of the system, the fatigue screening includes validating the component intermediate-grid finite-element-model with test data.

In one or more embodiments of the system, the fatigue screening includes performing a fatigue crack initiation analysis on a plurality of elements in the component intermediate-grid finite-element-model to identify the plurality of hot spot locations.

In one or more embodiments of the system, the deterministic durability-and-damage-tolerance analysis includes calculating one or more crack initiation results in the component fine-grid finite-element-model in response to a plurality of fatigue spectra.

In one or more embodiments of the system, the deterministic durability-and-damage-tolerance analysis includes calculating one or more crack growth results in the component fine-grid finite-element-model in response to the one or more crack initiation results. The plurality of crack results include the one or more crack growth results.

In one or more embodiments of the system, the probabilistic durability-and-damage-tolerance analysis includes calculating a single flight probability of failure in response to a plurality of geometry variations, a plurality of material variations, a plurality of loading variations, and a plurality of manufacturing variations of the component; and calculating the plurality of crack margins for the component fine-grid finite-element-model in response to the single flight probability of failure.

In one or more embodiments of the system, the computer is operational to: extract the one or more fasteners and a corresponding joint from the component intermediate-grid finite-element-model by a free body load extraction; and generate a plurality of loads for the one or more fasteners and the corresponding joint.

In one or more embodiments of the system, the computer is operational to: generate a model of the one or more fasteners and the corresponding joint by a parametric modeling in response to a plurality of boundary loads and a plurality of applied loads to the component intermediate-grid finite-element-model. The model includes the plurality of details.

A non-transitory computer readable storage medium storing instructions that control data processing is provided herein. The instructions, when executed by a processor cause the processor to perform a plurality of operations including reading a coarse-grid finite-element-model of a component from one or more libraries; and identifying a plurality of static stress locations neighboring at least one of one or more fasteners and one or more non-fastener stress concentration regions in the component by a static analysis of a component intermediate-grid finite-element-model of the component. The component intermediate-grid finite-element-model has higher fidelity than the coarse-grid finite-element-model. The operations include identifying a plurality of hot spot locations in the component intermediate-grid finite-element-model by performing a fatigue screening on the component; generating a plurality of details for the component intermediate-grid finite-element-model based on the plurality of hot spot locations; and predicting a plurality of crack results by a deterministic durability-and-damage-tolerance analysis of the plurality of details for a component fine-grid finite-element-model of the component. The component fine-grid finite-element-model has higher fidelity than the component intermediate-grid finite-element-model; and calculating a plurality of crack margins for the component fine-grid finite-element-model by a probabilistic durability-and-damage-tolerance analysis of the plurality of crack results. The plurality of crack margins include a final crack initiation margin and a final crack growth margin. The operations include generating an output file that contains the final crack initiation margin and the final crack growth margin.

In one or more embodiments of the non-transitory computer readable storage medium, the plurality of operations includes generating the component intermediate-grid finite-element-model by increasing a fidelity of the coarse-grid finite-element-model neighboring the at least one of the one or more fasteners and the one or more non-fastener stress concentration regions.

The above features and advantages, and other features and advantages of the present disclosure are readily apparent from the following detailed description of the best modes for carrying out the disclosure when taken in connection with the accompanying drawings.

### BRIEF DESCRIPTION OF THE DRAWINGS

FIGS. 1A and 1B are a flow diagram of a method for virtual fatigue simulation in accordance with one or more exemplary embodiments.
FIG. 2 is a detailed flow diagram of a component/sub-component modeling step in accordance with one or more exemplary embodiments.
FIG. 3 is a detailed flow diagram of a multiaxial crack initiation step in accordance with one or more exemplary embodiments.
FIG. 4 is a detailed flow diagram of a deterministic crack growth step in accordance with one or more exemplary embodiments.
FIG. 5 is a detailed flow diagram of a probabilistic crack growth step in accordance with one or more exemplary embodiments.
FIG. 6 is a detailed flow diagram of a free body load extraction step in accordance with one or more exemplary embodiments.
FIG. 7 is a schematic block diagram of a computer-based system in accordance with one or more exemplary embodiments.
FIG. 8 is a schematic plan and cross-sectional view diagram of a component with a joint in accordance with one or more exemplary embodiments.
FIG. 9 is a schematic perspective diagram of a component with a non-fastener stress concentration region in accordance with one or more exemplary embodiments.

### DETAILED DESCRIPTION

Embodiments of the present disclosure include a method and/or a system that provides virtual fatigue testing of components early in a design phase. A technique implemented by the method/system provide structural simulation fidelity, accuracy and speed to capture local stress and strain that may cause fatigue cracking in components (e.g., aircraft structures). The technique includes a detailed finite element modeling approach and several codes to automate the process of making models, generating local stress/strain, screening the data to identity potential fatigue hotspots in the components, and calculating fatigue crack initiation and growth lives . The technique provides an additional level of detail around specific features in the structure, to better estimate the local stress/strain around such features, and thereby enables an accurate estimate of when fatigue cracking may start and how fast the fatigue cracking may grow. The data is generally used to refine the designs of the components to avoid unexpected fatigue cracking.

Detailed finite element models of the components are built that account for individual fasteners and/or non-fastener stress concentration features in the models. The local stress/strains are screened to identify areas of concern in the components for the fatigue cracking. The identified areas are modeled with additional detail around fasteners and/or non-fastener stress concentration features to capture true three-dimensional states of stress in the components. The data may be used to predict when/where fatigue cracking may occur during normal use. The technique involves detailed finite element models generated using specific modeling guidelines, and screening tools to sort through the data to identify the hot spot locations. Highly detailed models are used to predict local stress/strain effects where variations in the designs may be interrogated. For instance, if a fastener hole is slightly oversized, the highly detailed models aid in explaining how the oversized fastener hole effects loads going into adjacent fasteners.

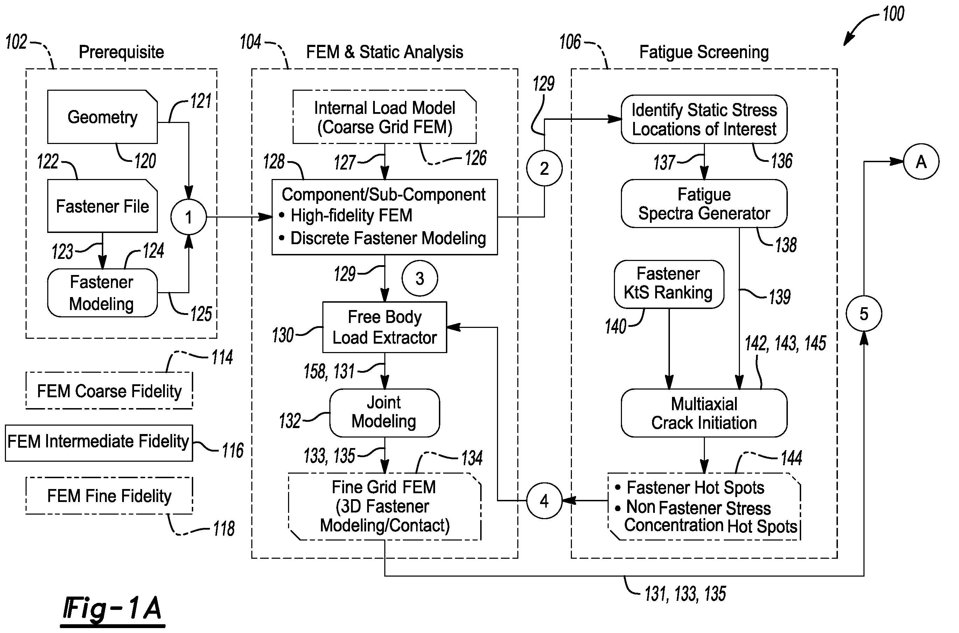

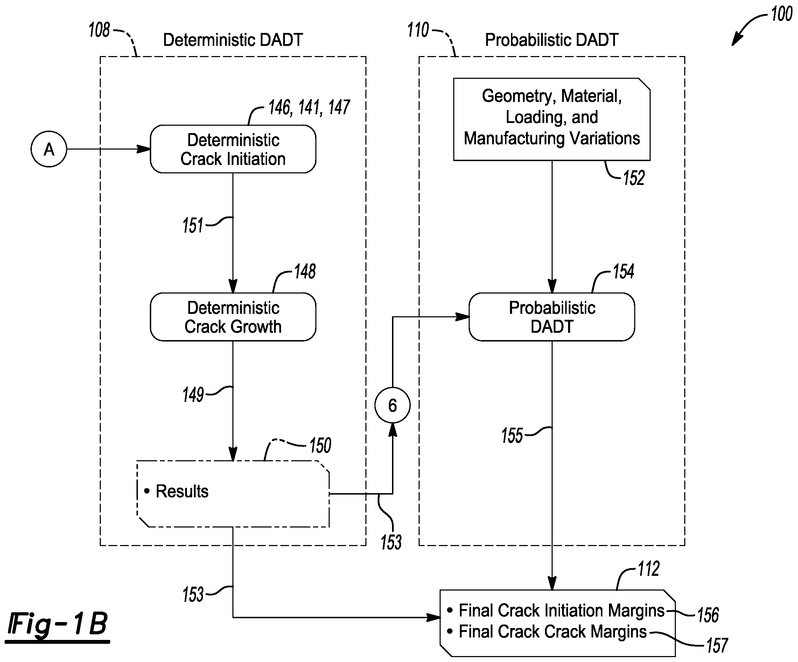

Referring to FIGS. 1A and 1B, a flow diagram of an example method for virtual fatigue simulation is shown in accordance with one or more exemplary embodiments. The method (or process) 100 may be implemented by one or more computers and one or more user interface devices (e.g., a monitor with a keyboard and/or mouse). The method 100 generally includes steps 102 to 110, as illustrated. The sequence of steps is shown as a representative example. Other step orders may be implemented to meet the criteria of a particular application.

The step 102 implements a prerequisite data collection operation. The step 102 may include steps 120 to 124, as illustrated. The sequence of steps is shown as a representative example. Other step orders may be implemented to meet the criteria of a particular application.

The step 120 implements an input read step that provides geometry information 121 for the component under test. The geometry information 121 is presented as intermediate-grid finite-element-models (FEM) 116. A fastener file 123 is read from a library in the step 122. The fastener file 123 generally includes the fasteners used to attach the component to other elements. Fastener information in the fastener file 123 is stored as intermediate-grid finite-element-models 116. The fasteners are modeled in the step 124. The resulting fastener models are presented as fastener intermediate-grid FEMs 125. The fastener modeling may be implemented with commercial software tools, such as Flexi-Fast, available from The Boeing Company, Arlington, Virginia. The geometry information 121 and the fastener intermediate-grid FEMs 125 may be presented (node 1) to the step 104.

The step 104 implements a finite element model and static analysis operation. The step 104 may include steps 126 to 134, as illustrated. The sequence of steps is shown as a representative example. Other step orders may be implemented to meet the criteria of a particular application.

The step 126 implements an input read step that provides internal load models from a library. The internal load models may be defined as coarse-grid FEMs 127. The coarse-grid FEMs 127 are coarse-grid finite-element-models 114. The intermediate-grid finite-element-models 116 generally have a higher fidelity than the coarse-grid finite-element-models 114. The coarse-grid FEMs 127 are presented to the step 128.

The step 128 implements a component/sub-component modeling operation. The step 128 utilizes the geometry information 121, the fastener intermediate-grid FEMs 125, and the coarse-grid FEMs 127 to create component/sub-component models (hereafter both referred to as component models for simplicity). The component models may be component intermediate-grid FEMs 129. The component intermediate-grid FEMs 129 are intermediate-grid finite-element-models 116. The component intermediate-grid FEMs 129 are presented (node 2) to the step 106. The component intermediate-grid FEMs 129 may also be presented (node 3) to the step 130.

The step 130 executes a free body load extractor tool. The free body load extractor tool speeds up the section free body loads extraction process and allows for efficient generation and iteration of different loads 158. The free body load extractor tool generally received the component intermediate-grid FEMs 129, and receives (node 4) fastener hot spot locations and non-fastener stress concentration hot spot locations from the step 106. Details 131 and the loads 158 generated by the free body load extractor tool may be presented to the step 132.

The step 132 executes a joint modeling tool. The joint modeling tool is operational to generate component fine-grid FEMs 133 of the components and fastener fine-grid FEMs 135 of the associated fasteners. In various embodiments, the component fine-grid FEMs 133 and the fastener fine-grid FEMs 135 may be high-fidelity three-dimensional models (e.g., fine-grid finite-element models 118). The fine-grid finite-element-models 118 generally have a higher fidelity than the intermediate-grid finite-element-models 116. Thus, the component fine-grid FEMs 133 have a higher fidelity than the component intermediate-grid FEMs 129. The component fine-grid FEMs 133 and the fastener fine-grid FEMs 135 are written to the step 108 from the step 134 (node 5). Additional details of the joint modeling tool may be found in co-pending US application serial number 18/454,961, which is hereby incorporated by reference in its entirety. Other joint modeling tools may be implemented to meet the design criteria of a particular application.

The step 106 executes a fatigue screening operation. The step 106 may include steps 136 to 144, as illustrated. The sequence of steps is shown as a representative example. Other step orders may be implemented to meet the criteria of a particular application.

The step 136 executes a stress location tool. The stress location tool receives the component intermediate-grid FEMs 129 (node 2) from the component/subcomponent operation. The stress location tool is operational to identify one or more static stress locations 137 of interest in the components. Once identified, the static stress locations 137 are presented to the step 138.

The step 138 executes a fatigue spectra generator tool. The fatigue spectra generator tool is operational to create fatigue spectrum loading sequences (fatigue spectra 139) that stress the components. The fatigue spectra generator tool may also generate load time history for operation conditions of the components. The fatigue spectra 139 and the load time history is presented to the step 142.

The step 140 executes a fastener KtS ranking tool. The fastener KtS ranking tool is operational to update the fastener intermediate-grid FEMs 125 with local peak stress at the stress concentration locations. The updated fastener intermediate-grid FEMs 125 are presented to the step 142.

The step 142 executes a multiaxial crack initiation tool. The multiaxial crack initiation tool is operational to identify when and where cracks may form in the components. An example multiaxial crack initiation tool may be Fe-Safe^{®}, developed by and is available from Dassault Systemes, Velizy-Villacoublay, France. Fe-Safe is a registered trademark of Dassault Systemes. The crack formation generally includes fastener hot spot locations 143 and non-fastener stress concentration hot spot locations 145. The fastener hot spot locations 143 and the non-fastener stress concentration hot spot locations 145 are presented (node 4) in the step 144 to the free body load extractor tool executed in the step 130. Other multiaxial crack initiation tools may be implemented to meet the design criteria of a particular application. Fastener hot spot locations 143 and/or non-fastener stress concentration hot spot locations 145 may be presented to the free body load extraction of the step 130.

The step 108 implements a deterministic durability-and-damage-tolerance (DaDT) analysis operation. The step 108 may include steps 146 to 150, as illustrated. The sequence of steps is shown as a representative example. Other step orders may be implemented to meet the criteria of a particular application.

The step 146 implements a deterministic crack initiation analysis 147. The deterministic crack initiation analysis 147 generally receives (node 5) the component fine-grid FEMs 133 from the storage step 134. The deterministic crack initiation analysis 147 is operational to perform a multiaxial crack initiation analysis to identify elements 141 in crack initiation results 151 where cracks may be formed in the components. The locations of the initiated crack are presented to the step 148. Examples of deterministic crack initiation analysis tools include Lifeworks^{®} and AFGROW^{®}. LifeWorks is a crack initiation (fatigue analysis) and crack growth analysis solver developed by and available from Boeing. Lifeworks is a registered trademark of Boeing. AFGROW is a fatigue crack analysis tool developed by the Air Force Research Laboratory. AFGROW is now maintained by and is available from LexTech, Inc. AFGROW is a registered trademark of LexTech, Inc., Centerville, Ohio. Other crack initiation tools may be implemented to meet the design criteria of a particular application.

The step 148 executes a deterministic crack growth tool. The deterministic crack growth tool is operational to determine crack growth results 149 that include a rate of growth of the cracks at the locations received from the crack initiation tool executed in the step 146. Examples of deterministic crack growth tools include CraFT and BAMpF. CraFT is a Crack Front Tool, a Boeing-developed Stress Intensity Factor (SIF) formulation option built inside LifeWorks. BAMpF^{®} is a Broad Application for Multipoint Fatigue that enables fatigue crack growth analysis of parts with non-standard geometry, loading, and residual stress conditions through the implementation of multipoint fracture mechanics. BAMpF is developed by and is available from Hill Engineering, LLC, Rancho Cordova, California. BAMpF is a registered trademark of Hill Engineering, LLC. Other crack growth tools may be implemented to meet the design criteria of a particular application. The crack growth results 149 may be presented (node 6) along with the crack initiation results 151 as part of crack results 153 in the step 150 to the step 110.

The step 110 implements a probabilistic durability-and-damage-tolerance analysis operation. The step 110 may include steps 152 to 154, as illustrated. The sequence of steps is shown as a representative example. Other step orders may be implemented to meet the criteria of a particular application.

The step 152 implements an input step that provide geometry variations, material variations, loading variations, and manufacturing variations of the components. The variation information is presented to the step 154.

The step 154 executes a probabilistic durability-and-damage-tolerance analysis tool. The probabilistic durability-and-damage-tolerance analysis tool is operational to determine crack margins 155 based on the crack results 153 (e.g., the crack initiation results 151 and the crack growth results 149) and the variations received from the step 152. The crack margins 155 may include final crack initiation margins 156 and final crack growth margins 157 of the components. An example probabilistic durability-and-damage-tolerance analysis tool is PROF^{®} (Probability of Fracture), developed by and available from the University of Dayton Research Institute, Dayton, Ohio. PROF is a registered trademark of the University of Dayton Research Institute. Other probabilistic durability-and-damage-tolerance analysis tool may be implemented to meet the design criteria of a particular application. The results of the deterministic durability-and-damage-tolerance analysis 108 and the probabilistic durability-and-damage-tolerance analysis 110 are presented as output data in the step 112.

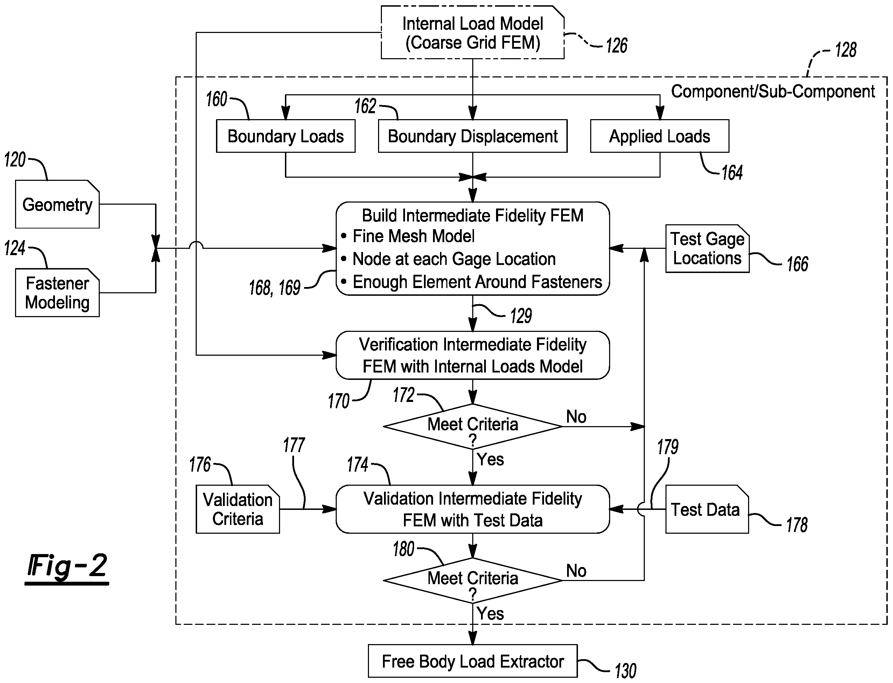

Referring to FIG. 2 with reference back to FIGS. 1A and 1B, a detailed flow diagram of an example implementation of the component/sub-component modeling (or generation step) 128 is shown in accordance with one or more exemplary embodiments. The step 128 generally includes steps 160 to 180, as illustrated. The sequence of steps is shown as a representative example. Other step orders may be implemented to meet the criteria of a particular application.

In steps 160, 162 and 164, the boundary loads, the boundary displacements and the applied loads for the components are established based on the internal load model read in step 126. The step 166 implements an input read step that provides test gage locations on the components. The information for the boundary loads, boundary displacements, applied loads, and test gage locations is provided to the step 168.

The step 168 implements a build operation for the component intermediate-grid FEMs 129. The build operation generally creates the models 169 for each component based on the boundary loads, the boundary displacements, the applied loads, the test gage locations, the geometry information 121 read in the step 120, and the fastener intermediate-grid FEMs 125 produced by the step 124. The fastener intermediate-grid FEMs 125 generally include fine mesh model information, a node at each gage location, and sufficient elements around the fastener locations. The fastener intermediate-grid FEMs 125 produced are presented to the step 170.

The step 170 implements a verification operation. The verification step 170 is operational to verify the component intermediate-grid FEMs 129 with the intermodal load models read in the step 126.

The verification is checked in the step 172. If the verification does not meet passing criteria, the flow returns to the step 168 where the component intermediate-grid FEMs 129 are updated. The flow subsequently repeats the steps 168 and 170 until the pass criteria is meet.

The step 174 implements a validation operation. Once the pass criteria is meet, the component intermediate-grid FEMs 129 are validated in the step 174. The validation is based on validation criteria 177 read from a library in the step 176, and test data 179 read from a library in the step 178.

The validation is checked in the step 180. If the validation does not meet passing criteria, the flow returns to the step 168 where the component intermediate-grid FEMs 129 are updated. The flow subsequently repeats the steps 168, 170, 172, and 174 until the pass criteria is meet. Once the pass criteria is meet, the resulting component intermediate-grid FEMs 129 are presented to the step 130 for the free body load extraction operation.

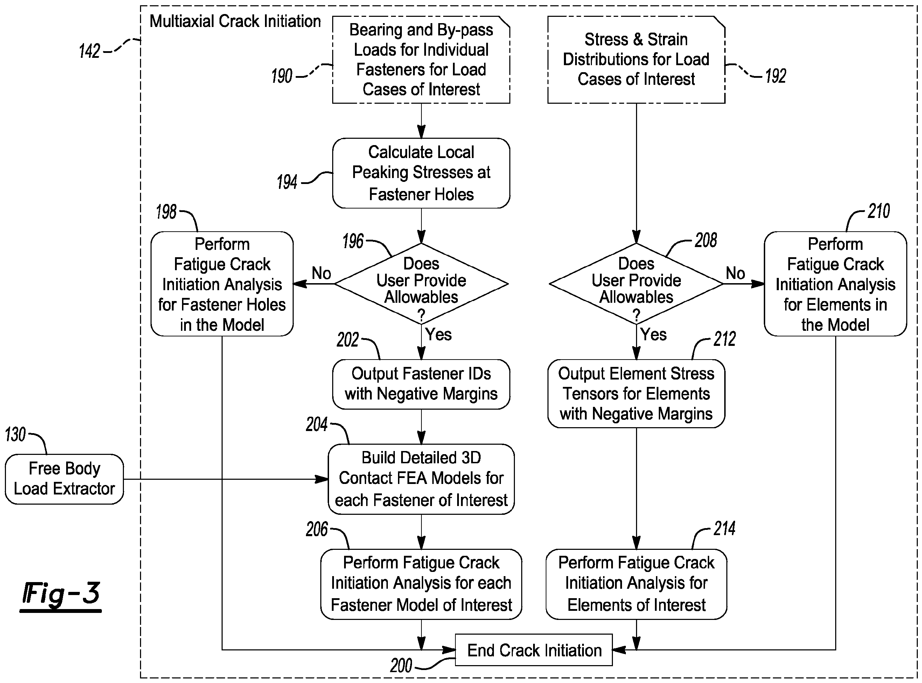

Referring to FIG. 3 with reference back to FIGS. 1A and 1B, a detailed flow diagram of an example implementation of the multiaxial crack initiation tool step 142 is shown in accordance with one or more exemplary embodiments. The step 142 generally includes steps 190 to 214, as illustrated. The sequence of steps is shown as a representative example. Other step orders may be implemented to meet the criteria of a particular application.

In step 190, bearing information and bypass load information for the fasteners of interest for the load cases is read from a library. The bearing information and bypass load information is presented to the step 194. In step 192, stress and strain distribution information for the load cases is read from a library. The stress and strain distribution information is presented to the step 194.

In step 194, local peaking stresses at fastener bores are calculated. A check is performed in the step 196 to determine if user provided allowables for the bearing and bypass loads are available. If the allowables are not available, a fatigue crack initiation analysis is performed in the step 198. In various embodiments, the fatigue crack initiation analysis may be implemented with the Fe-Safe tool. Thereafter, the multiaxial crack initiation tool step 142 may end in the step 200. If the allowables are available, the flow continues with the step 202.

The step 202 implements an identification operation. The step 202 is generally operational to determine fastener identification values where the fasteners have negative performance margins. The identification values are presented to the step 204.

The step 204 implements a build operation for detailed three-dimensional contact finite-element-analysis models for each fastener of interest. The contact finite-element-analysis modes may be based on the results of the free body load extractor tool in the step 130. The detailed three-dimensional contact finite-element-analysis models are presented to the step 206.

The step 206 implements a fatigue crack initiation analysis. The step 206 is operational to determine when and where cracks are beginning in the components. Thereafter, the step 142 may end in the step 200. In various embodiments, the fatigue crack initiation analysis is implemented by the Fe-Safe tool.

A check is performed in the step 208 to determine if user provided allowables for the stress and strain distributions are available. If the allowables are not available, a fatigue crack initiation analysis is performed in the step 210. In various embodiments, the fatigue crack initiation analysis may be implemented with the Fe-Safe tool. Thereafter, the multiaxial crack initiation tool step 142 may end in the step 200. If the allowables are available, the flow continues with the step 212.

The step 212 implements an identification operation. The step 212 is generally operational to determine fastener identification values where the fasteners have negative performance margins. The identification values are presented to the step 214.

The step 214 implements another fatigue crack initiation analysis. The step 214 is operational to determine when and where cracks are beginning in the components. In various embodiments, the fatigue crack initiation analysis is implemented by the Fe-Safe tool. Thereafter, the step 142 may end in the step 200.

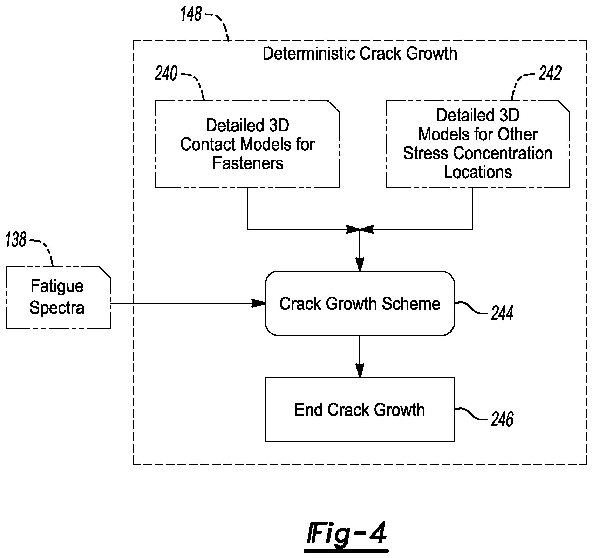

Referring to FIG. 4 with reference back to FIGS. 1A and 1B, a detailed flow diagram of an example implementation of the deterministic crack growth tool of step 148 is shown in accordance with one or more exemplary embodiments. The step 148 generally includes steps 240 to 246, as illustrated. The sequence of steps is shown as a representative example. Other step orders may be implemented to meet the criteria of a particular application.

In step 240, detailed three-dimensional contact models for the fasteners of interest is read from a library. The detailed three-dimensional contact models is presented to the step 244. In step 242, detailed three-dimensional models for other stress concentrations is read from a library. The detailed three-dimensional models for other stress concentrations is presented to the step 244.

The step 244 implements the deterministic crack growth tool. The deterministic crack growth tool is operational to determine a rate of growth of the cracks at the locations received from the crack initiation tool and the fatigue spectra of the step 138. Examples of deterministic crack growth tools include the CraFT and the BAMpF. Other deterministic crack growth tools may be implemented to meet the design criteria of a particular application. The deterministic crack growth tool ends in the step 246.

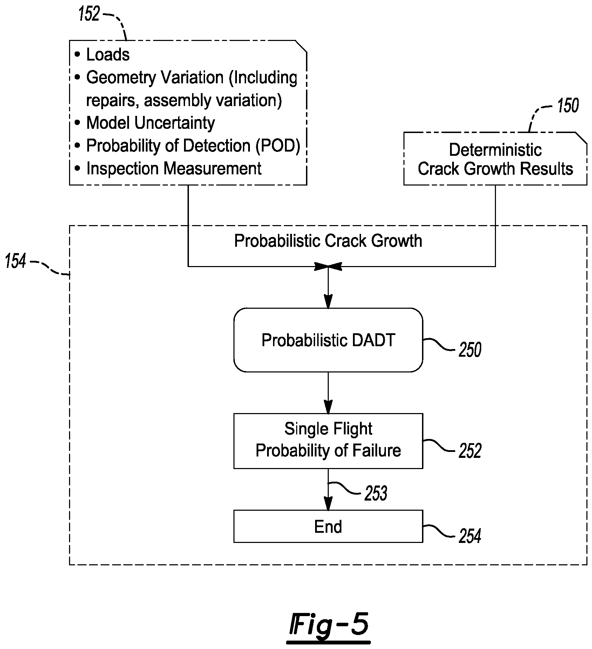

Referring to FIG. 5 with reference back to FIGS. 1A and 1B, a detailed flow diagram of an example implementation of the probabilistic crack growth tool of step 154 is shown in accordance with one or more exemplary embodiments. The step 154 generally includes steps 250 to 254, as illustrated. The sequence of steps is shown as a representative example. Other step orders may be implemented to meet the criteria of a particular application.

The step 250 executes the probabilistic durability-and-damage -tolerance analysis tool. The probabilistic durability-and-damage-tolerance analysis tool is operational to determine final crack initiation margins and final crack growth margins of the components based on the component variations of step 152, and the deterministic crack growth results of the step 150. An example probabilistic durability-and-damage-tolerance analysis tool is the PROF tool.

The step 252 implements a single flight probability of failure (SFPOF) tool. The single flight probability of failure tool is operation to determine a single flight probability of a failure 253 of the components in a typical single-flight scenario based on the results of the probabilistic durability-and-damage-tolerance analysis tool of step 250. The step 154 may end with the step 254.

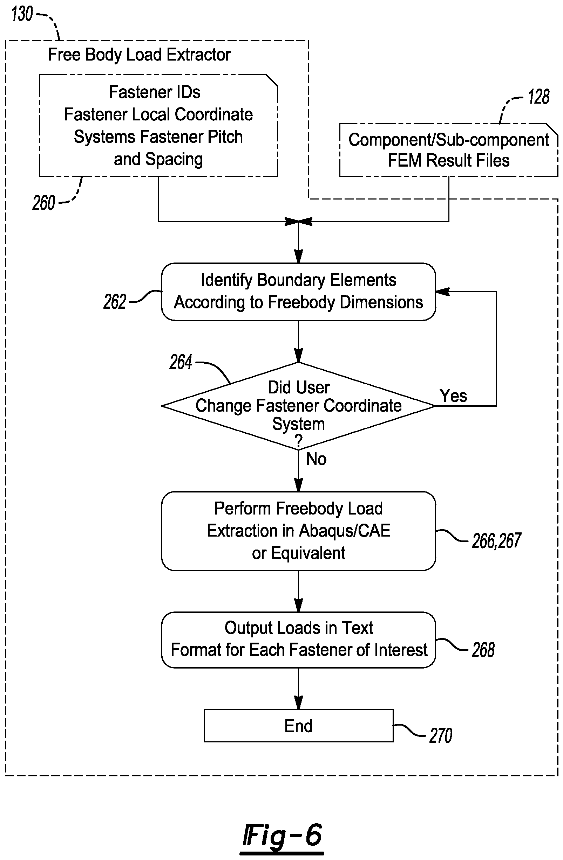

Referring to FIG. 6 with reference back to FIGS. 1A and 1B, a detailed flow diagram of an example implementation of the free body load extractor tool of step 130 is shown in accordance with one or more exemplary embodiments. The step 154 generally includes steps 260 to 270, as illustrated. The sequence of steps is shown as a representative example. Other step orders may be implemented to meet the criteria of a particular application.

In the step 260, fastener identifications, fastener location coordinate systems, fastener pitch, and fastener spacing information may be read from a library. The fastener information is presented to the step 262.

The step 262 implements an identification tool. The identification tool is operational to identify boundary elements according to free body dimensions based on the fastener information from the step 260 and the component/sub-component results from the step 128.

A decision is made in the step 264 regarding possible user changes to the fastener coordinate system. If changes were made, the flow returns to the step 262 to update the boundary elements. If no changes were made, the flow continues with the step 266.

The step 266 implements an extraction by the free body load extraction 267. The free body load extraction 267 may extract the one or more fasteners and a corresponding joint from the component intermediate-grid finite-element-model 129

In various embodiments, the free body load extractor tool may be implemented by Abaqus/CAE (Complete Abaqus Environment) software. Abaqus/CAE was developed by and is available from Dassault Systems, Velizy-Villacoublay, France. The results of the load extraction may be presented to the step 268. Other free body load extractor tools may be implemented to meet the design criteria of a particular application.

The step 268 implements a conversion operation. The conversion operation is operational to output the loads generated by the step 266 in a text format for each fastener of interest. The text information may be presented to the step 132. The step 130 generally ends in the step 270.

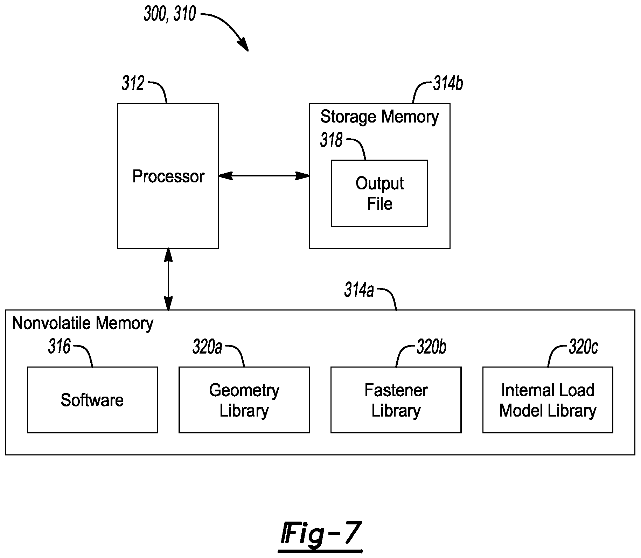

Referring to FIG. 7 with references back to FIGS. 1A and 1B, a schematic block diagram of an example implementation of a computer-based system 300 is shown in accordance with one or more exemplary embodiments. The system 300 is operational to perform the method 100 for virtual fatigue simulation. The system 300 is operational to generate output files in a non-transitory computer readable storage that are suitable for identifying potential fatigue hot spot locations in the components.

The system 300 includes a computer 310 having one or more processor 312 (one shown) and one or more storage media 314a-314b. A first storage medium (e.g., 314a) may contain one or more instructions 316 (or code or software programs) readable and executable by the processor 312. The first storage medium 314a may implement libraries 320a-320c that record the geometry information 121, the fastener files 123, and the coarse-grid FEMs 127. A storage output file 318 that stores the data of the output file of step 112 that defines the final crack initiation margins and the final crack growth margins may reside in a second storage medium (e.g., 314b). The first storage medium 314a may be a non-transitory computer readable storage medium. The second storage medium 314b may be a non-transitory and/or transitory computer readable storage medium.

The instructions 316 may be read and executed by the computer 310 (e.g., the processor 312) to implement the process of generating the storage output file 318 for the models of the joint. The libraries 320a-320c may be accessed as appropriate during execution. In various embodiments, the instructions 316, the libraries 320a-320c and/or the storage output file 318 may be stored in the same storage medium 314a or 314b.

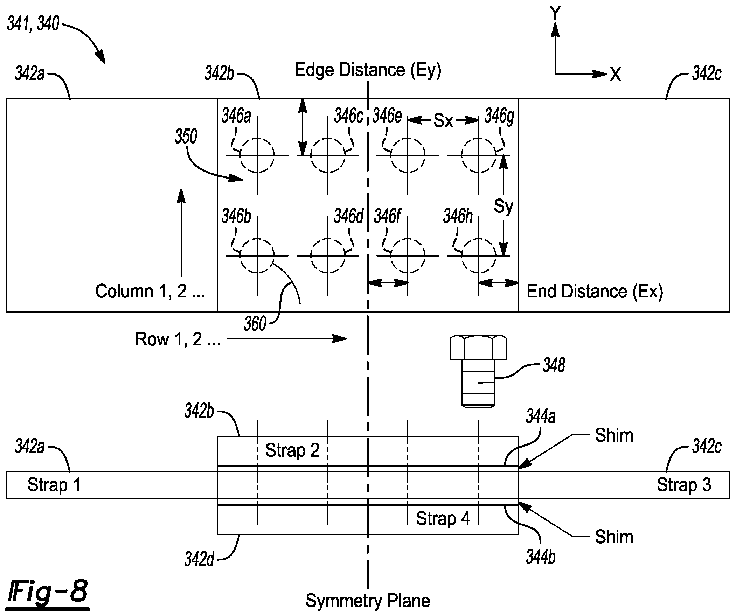

Referring to FIG. 8, a schematic plan and cross-sectional view diagram of an example component 340 with a joint 341 is shown in accordance with one or more exemplary embodiments. The joint 341 in the example includes multiple (e.g., four) straps 342a-342d, multiple (e.g., two) shims 344a-344b, and multiple (e.g., eight) fastener bores 346a-346h. Multiple fasteners (one shown) 348 are disposed in the fastener bores 346a-346h. The fastener bores 346a-346h and the respective fasteners 348 are arranged in a pattern 350. One or more cracks 360 (one shown) may form in the components due to fatigue.

Each strap 342a-342d is defined by a material, a thickness, a length, and a width. Likewise, each shim 344a-344b is defined by a material, a thickness, a length, and a width. The fastener bores 346a-346h are defined by a material a diameter, a length, and a width. The pattern 350 defines the number of columns (NC) (e.g., no greater than 4 in the example), a number of rows (NR) (e.g., no greater than 4 in the example), an x-spacing (Sx), and a y-spacing (Sy). Boundaries are defined by an edge distance (Ey) and an end spacing (Ex).

In various embodiments, the component 340 may be the full structure of a vehicle, such as an aircraft or spacecraft. In other embodiments, the component 340 may be a portion of the vehicle, such as a wing, airflow control surface, and the like. In still other embodiments, the component 340 may be a hand-held sized piece of the vehicle.

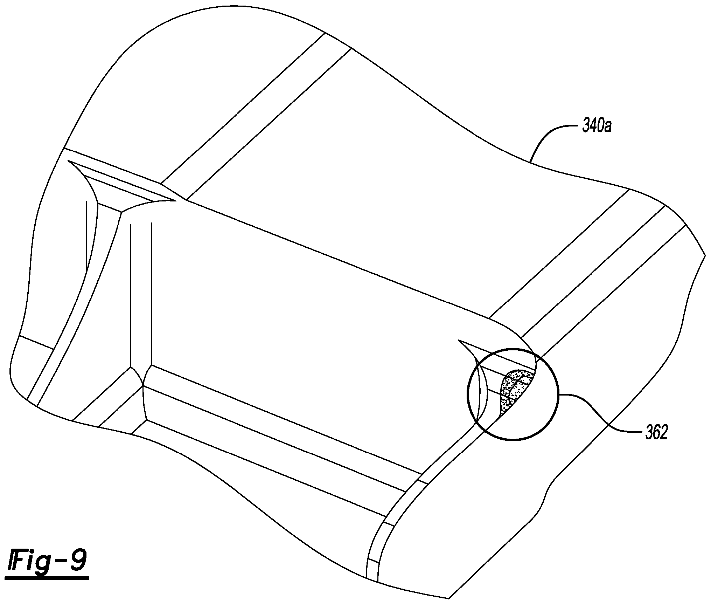

Referring to FIG. 9, a schematic perspective diagram of an example implementation of a component 340a with a non-fastener stress concentration region 362 is shown in accordance with one or more exemplary embodiments. The non-fastener stress concentration region 362 is generally located along a surface of the component 340a. In various embodiments, the non-fastener stress concentration region 362 may take form of a fillet with a radius of 2 inches. In other embodiments, the non-fastener stress concentration region 362 may take form of a fillet with a radius ranging from approximately 0.25 inch to approximately 1 inch (e.g., 0.5 inch). Other non-fastener stress concentration regions may be implemented to meet the design criteria of a particular application.

The models generated by the technique provide accurate stress/strain predictions at potential fatigue hot spot locations. As an airframe experiences different numbers of flights with different load levels. The models may be used during service to estimate remaining fatigue life. In addition, if an airframe is repurposed from an original design conditions, the airframe being outfitted with new structures, the models may be useful to updated the local stress/strain and determine if the new use case may impact the fatigue life of the airframe. The models may become part of a digital twin for each airframe to track a specific usage in service.

The technique generally reduce risks in a new development programs by making unexpected fatigue findings less likely to arise during the traditional full scale fatigue test. Fatigue hot spot locations may be identified in new structures earlier in the design process where the structure are easily adjusted to resist the fatigue. Therefore, costly fatigue testing may be reduced since the model results may be used for airframe validation instead. The reduced fatigue testing allows aircraft to be delivered faster and at lower cost.

The technique develops more detailed three-dimensional models of the components that includes effects of fasteners where unexpected cracking has been observed. The process provides an accurate measure of the local stress and strain, so the analysts may use the resulting information to better size the structure to avoid fatigue cracking. Additional details are used in the models and modeling of certain features, such as fasteners discreetly. The technique may also include risk assessment through probabilistic durability-and-damage-tolerance analysis that accounts for uncertainties in material property, loading, geometry imperfection, variation, and the like.

As explained above and reiterated below, the present disclosure includes, without limitation, the following example implementations.

Clause 1. A method for virtual fatigue testing comprises reading a coarse-grid finite-element-model of a component from one or more libraries with a computer; identifying a plurality of static stress locations neighboring at least one of one or more fasteners and one or more non-fastener stress concentration regions in the component by a static analysis of a component intermediate-grid finite-element-model of the component, wherein the component intermediate-grid finite-element-model has higher fidelity than the coarse-grid finite-element-model; identifying a plurality of hot spot locations in the component intermediate-grid finite-element-model by performing a fatigue screening on the component; generating a plurality of details for the component intermediate-grid finite-element-model based on the plurality of hot spot locations; predicting a plurality of crack results by a deterministic durability-and-damage-tolerance analysis of the plurality of details for a component fine-grid finite-element-model of the component, wherein the component fine-grid finite-element-model has higher fidelity than the component intermediate-grid finite-element-model; calculating a plurality of crack margins for the component fine-grid finite-element-model by a probabilistic durability-and-damage-tolerance analysis of the plurality of crack results, wherein the plurality of crack margins include a final crack initiation margin and a final crack growth margin; and generating an output file that contains the final crack initiation margin and the final crack growth margin.

Clause 2. The method of clause 1, wherein the fatigue screening comprises: generating the component intermediate-grid finite-element-model by increasing a fidelity of the coarse-grid finite-element-model neighboring at least one of the one or more fasteners and the one or more non-fastener stress concentration regions.

Clause 3. The method of clause 2, wherein the fatigue screening further comprises: validating the component intermediate-grid finite-element-model with test data.

Clause 4. The method of clause 3, wherein the fatigue screening further comprises: performing a fatigue crack initiation analysis on a plurality of elements in the component intermediate-grid finite-element-model to identify the plurality of hot spot locations.

Clause 5. The method of clauses 1 to 4, wherein the deterministic durability-and-damage-tolerance analysis comprises: calculating one or more crack initiation results in the component fine-grid finite-element-model in response to a plurality of fatigue spectra.

Clause 6. The method of clause 5, wherein the deterministic durability-and-damage-tolerance analysis further comprises: calculating one or more crack growth results in the component fine-grid finite-element-model in response to the one or more crack initiation results, wherein the plurality of crack results include the one or more crack growth results.

Clause 7. The method of clauses 1 to 4, wherein the probabilistic durability-and-damage-tolerance analysis comprises: calculating a single flight probability of failure in response to a plurality of geometry variations, a plurality of material variations, a plurality of loading variations, and a plurality of manufacturing variations of the component; and calculating the plurality of crack margins for the component fine-grid finite-element-model in response to the single flight probability of failure.

Clause 8. The method of clauses 1 to 4, further comprising: extracting the one or more fasteners and a corresponding joint from the component intermediate-grid finite-element-model by a free body load extraction; and generating a plurality of loads for the one or more fasteners and the corresponding joint.

Clause 9. The method of clause 8, further comprising: generating a model of the one or more fasteners and the corresponding joint by a parametric modeling in response to a plurality of boundary load and a plurality of applied loads to the component intermediate-grid finite-element-model, wherein the model includes the plurality of details.

Clause 10. A system for virtual fatigue testing comprising one or more libraries operational to store a coarse-grid finite-element-model of a component; and a computer operational to: identify a plurality of static stress locations neighboring at least one of one or more fasteners and one or more non-fastener stress concentration regions in the component by a static analysis of a component intermediate-grid finite-element-model of the component, wherein the component intermediate-grid finite-element-model has higher fidelity than the coarse-grid finite-element-model; identify a plurality of hot spot locations in the component intermediate-grid finite-element-model by performing a fatigue screening on the component; generate a plurality of details for the component intermediate-grid finite-element-model based on the plurality of hot spot locations; predict a plurality of crack results by a deterministic durability-and-damage-tolerance analysis of the plurality of details for a component fine-grid finite-element-model of the component, wherein the component fine-grid finite-element-model has higher fidelity than the component intermediate-grid finite-element-model; calculate a plurality of crack margins for the component fine-grid finite-element-model by a probabilistic durability-and-damage-tolerance analysis of the plurality of crack results, wherein the plurality of crack margins include a final crack initiation margin and a final crack growth margin; and generate an output file that contains the final crack initiation margin and the final crack growth margin.

Clause 11. The system of clause 10, wherein the fatigue screening comprises: generating the component intermediate-grid finite-element-model by increasing a fidelity of the coarse-grid finite-element-model neighboring the at least one of the one or more fasteners and the one or more non-fastener stress concentration regions.

Clause 12. The system of clause 10 or 11, wherein the fatigue screening further comprises: validating the component intermediate-grid finite-element-model with test data.

Clause 13. The system of clause 12, wherein the fatigue screening further comprises: performing a fatigue crack initiation analysis on a plurality of elements in the component intermediate-grid finite-element-model to identify the plurality of hot spot locations.

Clause 14. The system of clauses 10 to 13, wherein the deterministic durability-and-damage-tolerance analysis comprises: calculating one or more crack initiation results in the component fine-grid finite-element-model in response to a plurality of fatigue spectra.

Clause 15. The system of clause 14, wherein the deterministic durability-and-damage-tolerance analysis further comprises: calculating one or more crack growth results in the component fine-grid finite-element-model in response to the one or more crack initiation results, wherein the plurality of crack results include the one or more crack growth results.

Clause 16. The system of clauses 10 to 15, wherein the probabilistic durability-and-damage-tolerance analysis comprises: calculating a single flight probability of failure in response to a plurality of geometry variations, a plurality of material variations, a plurality of loading variations, and a plurality of manufacturing variations of the component; and calculating the plurality of crack margins for the component fine-grid finite-element-model in response to the single flight probability of failure.

Clause 17. The system of clauses 10 to 16, wherein the computer is further operational to: extract the one or more fasteners and a corresponding joint from the component intermediate-grid finite-element-model by a free body load extraction; and generate a plurality of loads for the one or more fasteners and the corresponding joint.

Clause 18. The system of clauses 10 to 17, wherein the computer is further operational to: generate a model of the one or more fasteners and the corresponding joint by a parametric modeling in response to a plurality of boundary loads and a plurality of applied loads to the component intermediate-grid finite-element-model, wherein the model includes the plurality of details.

Clause 19. A non-transitory computer readable storage medium storing instructions that control data processing. The instructions, when executed by a processor cause the processor to perform a plurality of operations comprising reading a coarse-grid finite-element-model of a component from one or more libraries; identifying a plurality of static stress locations neighboring at least one of one or more fasteners and one or more non-fastener stress concentration regions in the component by a static analysis of a component intermediate-grid finite-element-model of the component, wherein the component intermediate-grid finite-element-model has higher fidelity than the coarse-grid finite-element-model; identifying a plurality of hot spot locations in the component intermediate-grid finite-element-model by performing a fatigue screening on the component; generating a plurality of details for the component intermediate-grid finite-element-model based on the plurality of hot spot locations; predicting a plurality of crack results by a deterministic durability-and-damage-tolerance analysis of the plurality of details for a component fine-grid finite-element-model of the component, wherein the component fine-grid finite-element-model has higher fidelity than the component intermediate-grid finite-element-model; calculating a plurality of crack margins for the component fine-grid finite-element-model by a probabilistic durability-and-damage-tolerance analysis of the plurality of crack results, wherein the plurality of crack margins include a final crack initiation margin and a final crack growth margin; and generating an output file that contains the final crack initiation margin and the final crack growth margin.

Clause 20. The non-transitory computer readable storage medium of clause 19 wherein the plurality of operations further comprises: generating the component intermediate-grid finite-element-model by increasing a fidelity of the coarse-grid finite-element-model neighboring the at least one of the one or more fasteners and the one or more non-fastener stress concentration regions

This disclosure is susceptible of embodiments in many different forms. Representative embodiments of the disclosure are shown in the drawings and are herein described in detail with the understanding that these embodiments are provided as an exemplification of the disclosed principles, not limitations of the broad aspects of the disclosure. To that extent, elements and limitations that are described, for example, in the Abstract, Background, Summary, and Detailed Description sections, but not explicitly set forth in the claims, should not be incorporated into the claims, singly or collectively, by implication, inference or otherwise.

For purposes of the present detailed description, unless specifically disclaimed, the singular includes the plural and vice versa. The words "and" and "or" shall be both conjunctive and disjunctive. The words "any" and "all" shall both mean "any and all", and the words "including," "containing," "comprising," "having," and the like shall each mean "including without limitation." Moreover, words of approximation such as "about," "almost," "substantially," "approximately," and "generally," may be used herein in the sense of "at, near, or nearly at," or "within 0-5% of," or "within acceptable manufacturing tolerances," or other logical combinations thereof. Referring to the drawings, wherein like reference numbers refer to like components.

The detailed description and the drawings or FIGS. are supportive and descriptive of the disclosure, but the scope of the disclosure is defined solely by the claims. While some of the best modes and other embodiments for carrying out the claimed disclosure have been described in detail, various alternative designs and embodiments exist for practicing the disclosure defined in the appended claims. Furthermore, the embodiments shown in the drawings or the characteristics of various embodiments mentioned in the present description are not necessarily to be understood as embodiments independent of each other. Rather, it is possible that each of the characteristics described in one of the examples of an embodiment may be combined with one or a plurality of other desired characteristics from other embodiments, resulting in other embodiments not described in words or by reference to the drawings. Accordingly, such other embodiments fall within the framework of the scope of the appended claims.

## Claims

1. A method (100) for virtual fatigue testing comprising:
reading (126) a coarse-grid finite-element-model (127) of a component (340) from one or more libraries (320a-320c) with a computer (310);
identifying (136) a plurality of static stress locations (137) neighboring at least one of one or more fasteners (348) and one or more non-fastener stress concentration regions (362) in the component (340) by a static analysis (104) of a component intermediate-grid finite-element-model (129) of the component (340), wherein the component intermediate-grid finite-element-model (129) has higher fidelity than the coarse-grid finite-element-model (127);
identifying (142) a plurality of hot spot locations (143,145) in the component intermediate-grid finite-element-model (129) by performing a fatigue screening (106) on the component (340);
generating (130) a plurality of details (131) for the component intermediate-grid finite-element-model (129 )based on the plurality of hot spot locations (143,145);
predicting (148) a plurality of crack results (153) by a deterministic durability-and-damage-tolerance analysis (108) of the plurality of details (131) for a component fine-grid finite-element-model (133) of the component (340), wherein the component fine-grid finite-element-model (133) has higher fidelity than the component intermediate-grid finite-element-model (129);
calculating (154) a plurality of crack margins (155) for the component fine-grid finite-element-model (133) by a probabilistic durability-and-damage-tolerance analysis (110) of the plurality of crack results (153), wherein the plurality of crack margins (155) include a final crack initiation margin (156) and a final crack growth margin (157); and
generating (154) an output file (318) that contains the final crack initiation margin (156) and the final crack growth margin (157).

2. The method (100) according to claim 1, wherein the fatigue screening (106) comprises:
generating (128) the component intermediate-grid finite-element-model (129) by increasing a fidelity of the coarse-grid finite-element-model (127) neighboring at least one of the one or more fasteners (348) and the one or more non-fastener stress concentration regions (362).

3. The method (100) according to claim 2, wherein the fatigue screening (106) further comprises:
validating (174) the component intermediate-grid finite-element-model (129) with test data (179).

4. The method (100) according to claim 3, wherein the fatigue screening (106) further comprises:
performing (142) a fatigue crack initiation analysis (210) on a plurality of elements (141) in the component intermediate-grid finite-element-model (129) to identify the plurality of hot spot locations (143,145).

5. The method (100) according to any one of the preceding claims , wherein the deterministic durability-and-damage-tolerance analysis (108) comprises:
calculating (146) one or more crack initiation results (151) in the component fine-grid finite-element-model (133) in response to a plurality of fatigue spectra (139).

6. The method (100) according to claim 5, wherein the deterministic durability-and-damage-tolerance analysis (108) further comprises:
calculating (244) one or more crack growth results (149) in the component fine-grid finite-element-model (133) in response to the one or more crack initiation results (151), wherein the plurality of crack results (153) include the one or more crack growth results (149).

7. The method (100) according to any one of the preceding claims, wherein the probabilistic durability-and-damage-tolerance analysis comprises:
calculating (252) a single flight probability of failure (253) in response to a plurality of geometry variations, a plurality of material variations, a plurality of loading variations, and a plurality of manufacturing variations (152) of the component (340); and
calculating (154) the plurality of crack margins (155) for the component fine-grid finite-element-model (133) in response to the single flight probability of failure (253).

8. The method (100) according to any one of the preceding claims, further comprising:
extracting (266) the one or more fasteners (348) and a corresponding joint (341) from the component intermediate-grid finite-element-model (129) by a free body load extraction (267); and
generating (130) a plurality of loads (158) for the one or more fasteners (348) and the corresponding joint (341).

9. The method (100) according to claim 8, further comprising:
generating (168) a model (169) of the one or more fasteners (348) and the corresponding joint (341) by a parametric modeling in response to a plurality of boundary load (160) and a plurality of applied loads (164) to the component intermediate-grid finite-element-model (129), wherein the model includes the plurality of details (131).

10. A system (300) for virtual fatigue testing comprising:
one or more libraries (320a-320c) operational to store a coarse-grid finite-element-model (127) of a component (340); and
a computer (310) operational to:
identify (136) a plurality of static stress locations (137) neighboring at least one of one or more fasteners (348) and one or more non-fastener stress concentration regions (362) in the component (340) by a static analysis (104) of a component intermediate-grid finite-element-model (129) of the component (340), wherein the component intermediate-grid finite-element-model (129) has higher fidelity than the coarse-grid finite-element-model (127);
identify (142) a plurality of hot spot locations (143,145) in the component intermediate-grid finite-element-model (129) by performing a fatigue screening (106) on the component (340);
generate (130) a plurality of details (131) for the component intermediate-grid finite-element-model (129) based on the plurality of hot spot locations (143,145);
predict (148) a plurality of crack results (153) by a deterministic durability-and-damage-tolerance analysis (108) of the plurality of details (131) for a component fine-grid finite-element-model (133) of the component (340), wherein the component fine-grid finite-element-model (133) has higher fidelity than the component intermediate-grid finite-element-model (129);
calculate (154) a plurality of crack margins (155) for the component fine-grid finite-element-model (133) by a probabilistic durability-and-damage-tolerance analysis (110) of the plurality of crack results (153), wherein the plurality of crack margins (155) include a final crack initiation margin (156) and a final crack growth margin (157); and
generate (154) an output file (318) that contains the final crack initiation margin (156) and the final crack growth margin (157).

11. The system (300) according to claim 10, wherein the fatigue screening (106) comprises:
generating (128) the component intermediate-grid finite-element-model (129) by increasing a fidelity of the coarse-grid finite-element-model (127) neighboring the at least one of the one or more fasteners (348) and the one or more non-fastener stress concentration regions (362); and/or
validating (174) the component intermediate-grid finite-element-model (129) with test data (179); and/or
performing (142) a fatigue crack initiation analysis (210) on a plurality of elements (141) in the component intermediate-grid finite-element-model (129) to identify the plurality of hot spot locations (143,145).

12. The system (300) according to any one of claims 10-11, wherein the deterministic durability-and-damage-tolerance analysis (108) comprises:
calculating (146) one or more crack initiation results (151) in the component fine-grid finite-element-model (133) in response to a plurality of fatigue spectra (139) and/or
calculating (244) one or more crack growth results (149) in the component fine-grid finite-element-model (133) in response to the one or more crack initiation results (151), wherein the plurality of crack results (153) include the one or more crack growth results (149).

13. The system (300) according to any one of claims 10-12, wherein the probabilistic durability-and-damage-tolerance analysis comprises:
calculating (252) a single flight probability of failure (253) in response to a plurality of geometry variations, a plurality of material variations, a plurality of loading variations, and a plurality of manufacturing variations (152) of the component (340); and
calculating (154) the plurality of crack margins (155) for the component fine-grid finite-element-model (133) in response to the single flight probability of failure (253).

14. The system (300) according to any one of claims 10-13, wherein the computer (310) is further operational to:
extract (266) the one or more fasteners (348) and a corresponding joint (341) from the component intermediate-grid finite-element-model (129) by a free body load extraction (267); and
generate (130) a plurality of loads (158) for the one or more fasteners (348) and the corresponding joint (341), and/or
generate (168) a model (169) of the one or more fasteners (348) and the corresponding joint (341) by a parametric modeling in response to a plurality of boundary loads (160) and a plurality of applied loads (164) to the component intermediate-grid finite-element-model (129), wherein the model includes the plurality of details (131).

15. A non-transitory computer readable storage medium (314a) storing instructions (316) that control data processing, the instructions (316), when executed by a processor (312) cause the processor (312) to perform a plurality of operations comprising:
reading (126) a coarse-grid finite-element-model (127) of a component (340) from one or more libraries (320a-320c);
identifying (136) a plurality of static stress locations (137) neighboring at least one of one or more fasteners (348) and one or more non-fastener stress concentration regions (362) in the component (340) by a static analysis (104) of a component intermediate-grid finite-element-model (129) of the component (340), wherein the component intermediate-grid finite-element-model (129) has higher fidelity than the coarse-grid finite-element-model (127);
identifying (142) a plurality of hot spot locations (143,145) in the component intermediate-grid finite-element-model (129) by performing a fatigue screening (106) on the component (340);
generating (130) a plurality of details (131) for the component intermediate-grid finite-element-model (129) based on the plurality of hot spot locations (143,145);
predicting (148) a plurality of crack results (153) by a deterministic durability-and-damage-tolerance analysis (108) of the plurality of details (131) for a component fine-grid finite-element-model (133) of the component (340), wherein the component fine-grid finite-element-model (133) has higher fidelity than the component intermediate-grid finite-element-model (129);
calculating (154) a plurality of crack margins (155) for the component fine-grid finite-element-model (133) by a probabilistic durability-and-damage-tolerance analysis (110) of the plurality of crack results (153), wherein the plurality of crack margins (155) include a final crack initiation margin (156) and a final crack growth margin (157); and
generating (154) an output file (318) that contains the final crack initiation margin (156) and the final crack growth margin (157), whereby the plurality of operation preferably further comprises
generating (128) the component intermediate-grid finite-element-model (129) by increasing a fidelity of the coarse-grid finite-element-model (127) neighboring the at least one of the one or more fasteners (348) and the one or more non-fastener stress concentration regions (362).
